# EUROPEAN PATENT APPLICATION

(11) **EP 4 660 089 A1**
(43) Date of publication of application: **10.12.2025**
(21) Application number: 25176858.6
(22) Date of filing: 16.05.2025
(51) Int. Cl.: B65B 35/36, B65B 35/44, B65G 15/14, B65G 47/08, B65G 47/84

(54) **UNIT FOR GROUPING PACKAGES CONTAINING A POURABLE PRODUCT AND RELATED METHOD**

(30) Priority: 03.06.2024 EP 24179520
(71) Applicant: Tetra Laval Holdings & Finance S.A., 1009 Pully (CH)
(72) Inventor: MAGNUSSON, Johan, 22186 Lund (SE)
(74) Representative: Tetra Pak Patent Attorneys

(57) **Abstract**

There is described a unit (8) for grouping packages (2) containing a pourable product in groups (10), the unit (8) comprises: a conveyor device (11) for advancing a sequence of packages (2), each package (2) of the sequence of packages (2) being spaced from one another by a first gap (G1); a gripping device (12) configured to grip one package (2b) of the sequence of packages (2) at a time; the gripping device (12) is configured to: accelerate the gripped package (2b) with respect to the other packages (2) and towards preceding packages (2) so that the gripped package (2b) abuts against the immediately adjacent preceding package (2) thereby pushing a number of preceding packages (2) together for reducing or zeroing said first gap (G1) between them; and/or to decelerate the gripped package (2b) with respect to the other packages (2) and towards following packages (2) so that the gripped package (2b) is distanced from the preceding packages (2) and abuts against the immediately adjacent following package (2b) thereby pushing a number of following packages (2) together for reducing or zeroing said first gap (G1) between them.

## Description

### TECHNICAL FIELD

The present invention relates to a unit for grouping packages containing a pourable product, preferably a pourable food product.

The present invention also relates to a method for grouping packages containing a pourable product, preferably a pourable food product.

### BACKGROUND ART

As it is generally known, many pourable food products, such as fruit juice, UHT (ultra-high temperature-treated) milk, wine, tomato sauce, etc., are sold in packages made of sterilized packaging material.

A typical example is the parallelepiped-shaped package for pourable food products known as Tetra Brik Aseptic (registered trademark), which is made by folding and sealing a laminated web of packaging material.

The packaging material has a multilayer structure comprising a base layer, e.g. made of paper, covered on both sides with layers of heat-seal plastic material, e.g. polyethylene.

In the case of aseptic packages for long-storage products, such as UHT milk, the packaging material also comprises a layer of oxygen-barrier material, e.g. an aluminum foil, which is superimposed on a layer of heat-seal plastic material, and is in turn covered with another layer of heat-seal plastic material forming the inner face of the package eventually contacting the food product.

Packages of this sort are normally produced on fully automatic packaging machines, which form and fill the packages starting from a multilayer web of packaging material.

In particular, the web of packaging material is initially wound in a reel and fed through a plurality of unwinding rollers.

The web of packaging material is typically maintained in a closed, sterile environment, and, while advanced by the aforementioned unwinding rollers, is folded to form a continuous tube by means of a known web folding device. The tube is then sealed longitudinally.

In order to perform the package forming operations, the tube is continuously fed along a straight vertical direction, is filled from above with the sterilized food product and is formed, sealed and subsequently cut along equally spaced transversal cross-sections extending along a direction orthogonal to the vertical direction.

So-called pillow packs are obtained thereby, which have a longitudinal sealing band, a top transversal sealing band and a bottom transversal sealing band.

The pillow packs are then cut at the cross-sections to be separated from one another and directed to a folding unit of the packaging machine for the final folding thereof.

The finished packages are thereby obtained.

In detail, the folding unit supplies a sequence of fully-formed, folded, finished packages.

The need for grouping the finished packages is known.

More specifically, the need is known for organizing or subdivide the sequence of packages in groups including a certain number of packages.

To this end, various solutions have been proposed, such as the one described in EP-A-3620411 and EP4310027A1, filed in the name of the Applicant, which disclose units for grouping packages.

Although being structurally and functionally valid and operating satisfyingly well, the known units for grouping packages are still open to further improvements, in particular as per the simplification of their architecture, the reduction of the total number of components and, therefore, the reduction of their overall cost. Moreover, a need is felt for a unit for grouping packages which is robust and effective while operating at high production speed.

### DISCLOSURE OF INVENTION

It is therefore an object of the present invention to provide a unit for grouping packages which is designed to meet the above-mentioned needs in a straightforward and low-cost manner.

This object is achieved by a unit for grouping packages as claimed in the appended independent claim 1.

It is a further object of the present invention to provide a method for grouping packages which is designed to meet the above-mentioned needs in a straightforward and low-cost manner.

This object is achieved by a method for grouping packages as claimed in the appended independent claim 10.

Preferred embodiments of the present invention are laid down in the appended dependent claims.

### BRIEF DESCRIPTION OF THE DRAWINGS

A non-limiting embodiment of the present invention will be described by way of example with reference to the accompanying drawings, in which:
Figure 1 is a schematic perspective view, with parts removed for clarity, of a packaging machine including a unit for grouping packages according to the present invention;
Figure 2 is a perspective view, with parts removed for clarity, of the unit for grouping packages according to the present invention;
Figures 3a to 3d are schematic top views, with parts removed for clarity, of the unit for grouping packages of Figure 2 during respective distinct operative conditions;
Figure 4 is a schematic top view, with parts removed for clarity, of the unit for grouping packages according to a further embodiment of the present invention, during a particular operative condition;
Figure 5 is a perspective view of a non-limiting example of a package to be grouped by the unit according to the present invention.

### BEST MODE FOR CARRYING OUT THE INVENTION

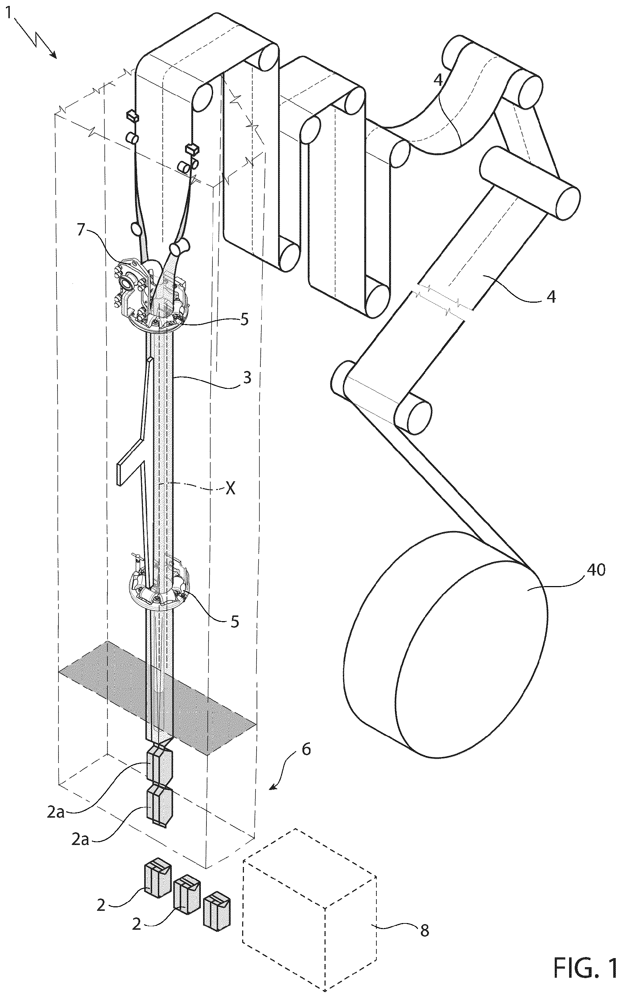

With reference to Figure 1, number 1 indicates as a whole a non limiting example of a packaging machine configured for producing sealed packages 2 containing a pourable product, preferably a pourable food product such as pasteurized or UHT milk, water, fruit juice, wine, peas, beans, etc.

In detail, packaging machine 1 is configured to form, seal and fold packages 2 starting from a web 4 of packaging material, which is initially wound in a reel 40, and then folded into a tube 3 of packaging material, according to a manner known and not described in detail.

Preferably, the packaging material has a multilayer structure (not shown), and comprises a layer of fibrous material, e.g. paper, covered on both sides with respective layers of heat-seal plastic material, e.g. polyethylene.

In the case of aseptic packages 2 for long-storage products, such as UHT milk, the packaging material also comprises a layer of gas-and-light barrier material, e.g. aluminum foil or ethylene vinyl alcohol (EVOH) film, which is superimposed on a layer of heat-seal plastic material, and is in turn covered with another layer of heat-seal plastic material, the latter forming the inner face of package 2 eventually contacting the pourable product.

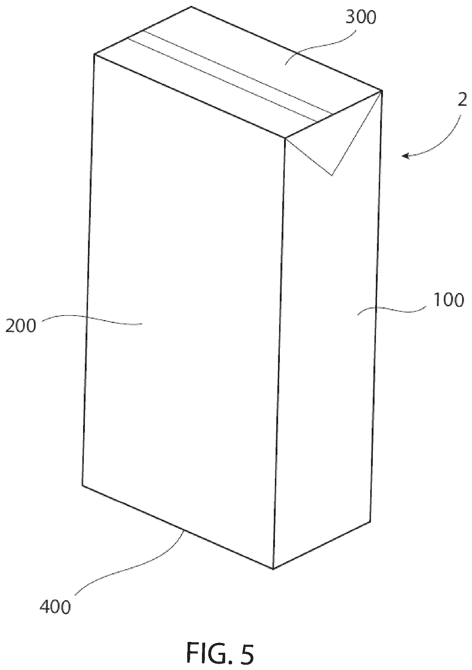

As shown in Figure 5, according to the non-limiting preferred embodiment shown, each package 2 has a substantially prismatic shape. In the preferred embodiment shown, package 2 is parallelepiped-shaped, with a rectangular cross-section.

In detail, package 2 includes a first pair of opposite lateral walls 100 and a second pair of opposite lateral walls 200. Lateral walls 100 of first pair are substantially parallel to each other. Lateral walls 200 of second pair 200 are substantially parallel to each other and/or substantially perpendicular to lateral walls 100 of first pair.

Package 2 further includes a top wall 300 and a bottom wall 400 opposite to the top wall 300. The lateral walls 100, 200 are interposed between the top wall 300 and the bottom wall 400.

As schematically shown in Figure 1, packaging machine 1 comprises conveying means configured to advance the web 4 along an advancement path.

Packaging machine 1 comprises a web folding device 5 for progressively folding the advancing web 4 into a tube 3 of packaging material.

In particular, in order to form tube 3, web folding device 5 is configured to progressively fold web 4 from a sheet-like configuration to a C-shaped configuration and then into a substantially tubular shaped configuration, according to a manner known and not described in detail.

Preferably, packaging machine 1 comprises a sterilization unit (not shown) configured for applying a sterilizing agent, for example containing hydrogen peroxide, on web 4 prior to its folding into tube 3.

Packaging machine 1 comprises a forming and sealing unit 6 (known per se and only schematically shown) for forming tube 3 by imparting a predetermined external shape, corresponding to a precursor of the shape of package 2, to successive longitudinal portions of tube 3, and for sealing tube 3 at equally spaced cross-sections.

Packaging machine 1 comprises a filling system 7 (only partially shown) configured to fill tube 3 with the pourable product.

Preferably, forming and sealing unit 6 has a longitudinal axis X along which tube 3 is fed, in use.

In particular, such longitudinal axis X is parallel to a straight direction, which preferably is a straight vertical direction, as schematized in Figure 1.

Hence, in use, tube 3 is fed along the longitudinal axis X, downwards, and while being filled from above is formed and sealed by forming and sealing unit 6.

More specifically, tube 3 is drawn (downwards) along the longitudinal axis X by forming and sealing unit 6.

In this way, a plurality of pillow packs 2a are obtained.

Packaging machine 1 further comprises a folding unit (known per se and not shown) for folding the pillow packs 2a, thereby obtaining packages 2.

In light of the above, the folding unit is configured to output (i.e. to supply or to provide or to feed) a sequence of fully formed packages 2 containing a pourable product.

Packaging machine 1 further comprises a unit 8 for grouping packages 2, i.e. for arranging the sequence of packages 2 into separate groups 10 of packages 2.

In the following, for the sake of brevity, groups 10 of packages 2 may be indicated as groups 10.

Each group 10 includes a row of packages 2.

It may be said that the sequence of packages 2 released from the folding unit is already (abstractly) a sequence of groups 10 of packages 2, whereby the several groups 10 are still not spatially defined and separated from one another.

Nevertheless, it is to be noted that each group 10 is physically defined and separated from the other groups 10 by means of unit 8 and downstream of unit 8, as it will be clear from the following explanation.

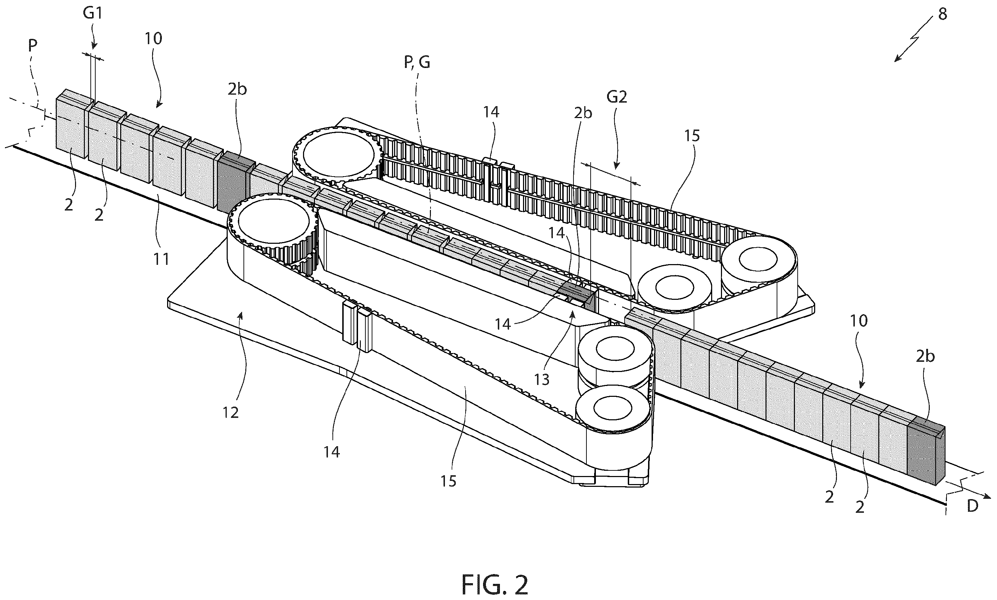

As visible in Figure 2, unit 8 comprises a conveyor device 11 configured to advance a sequence of packages 2, and therefore a sequence of groups 10, in an advancement direction D and along an advancing path P.

In detail, conveyor device 11 advances, in use, a sequence of packages 2, in particular being arranged in a row along path P.

In greater detail, conveyor device 11 advances, in use, a plurality of packages 2 each aligned along direction D and path P and initially spaced from one another by first gap G1.

More specifically, the folding unit is configured to feed a plurality of packages 2 to conveyor device 11.

Then, conveyor device 11 is configured to organize such packages 2, according to a manner known and not described in detail, into the sequence of packages 2 spaced by first gap G1.

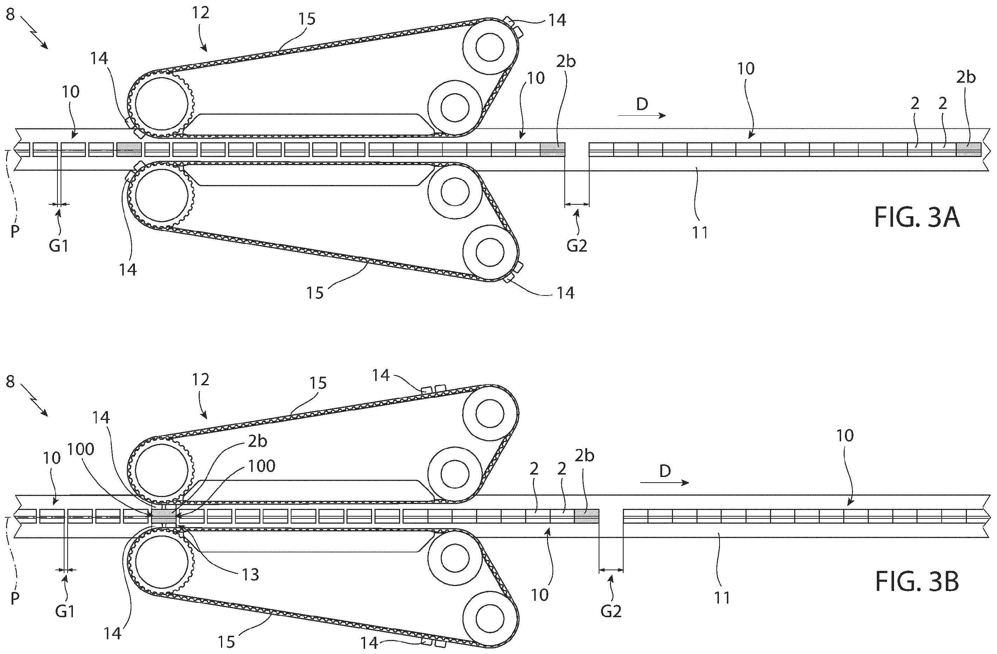

This condition is shown in Figure 3a, on the left side of the image.

In one embodiment, conveyor device 11 is defined by a belt conveyor configured to support packages 2 from below.

In detail, conveyor device 11 supports, in use, the bottom wall 400 of each package 2.

In greater detail, each package 2 is conveyed by conveyor device 11 while standing on its bottom wall 400 on the belt conveyor defined by conveyor device 11.

Moreover, conveyor device 11 is configured to advance each package 2 so that its first pair of opposite lateral walls 100 is aligned to direction D.

In other words, a leading first wall 100 and a trailing first wall 100 may be defined along path P and according to advancement direction D.

Unit 8 further comprises a gripping device 12 arranged adjacent to path P and configured to (cyclically) grip one package 2b of successive respective groups of packages 10 (to be formed) at a time.

More precisely, amongst the packages 2 of each group 10 to be formed, a single package 2b is configured to be gripped by the gripping device 12.

This condition is shown in Figure 3b.

As better explained below, such single package 2b is advantageously defined by the first package 2b of each group 10 to be formed.

Preferably, gripping device 12 is configured to accelerate the gripped package 2b (i.e. the package gripped by gripping device) with respect to the other packages 2 and towards preceding packages 2, relatively to advancement direction D, along path P and so that the gripped package 2b, and particularly the leading first wall 100 thereof, abuts against the immediately adjacent preceding package 2, and particularly the trailing first wall 100 thereof, thereby pushing a number of preceding packages 2 together for reducing or zeroing the first gap G1 between them.

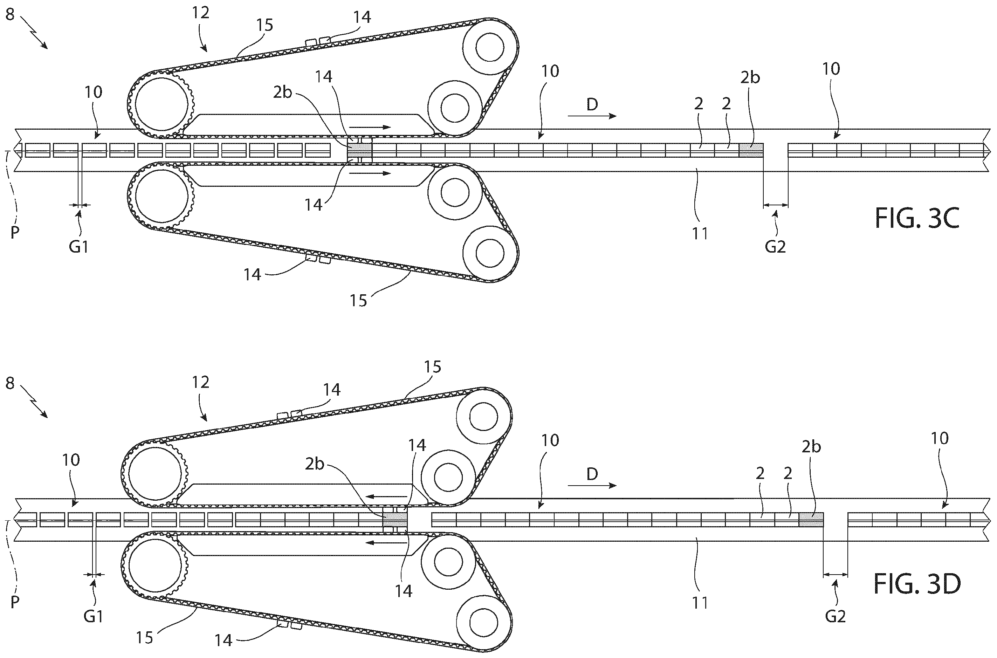

This condition is shown in Figure 3c.

In addition or in alternative, gripping device 12 is configured to decelerate the gripped package 2b with respect to the other packages 2 and towards following packages 2, relatively to the advancement direction D, along path P and so that the gripped package 2b, and particularly the trailing first wall 100 thereof, is distanced from the preceding packages (2) and/or abuts against the immediately adjacent following package 2, and particularly the leading first wall 100 thereof, thereby pushing a number of following packages 2 together for reducing or zeroing the first gap G1 between them.

This condition is shown in Figure 3d.

Preferably, gripping device 12 is configured to firstly accelerate and then decelerate the gripped package 2b. Hence, the first package 2b of each group 10 is subject to an acceleration step and to a subsequent deceleration step.

In particular, conveyor device 11 is configured to advance packages 2 along path P and in direction D with a predetermined, and constant, linear advancing speed.

Accordingly, gripping device 12 is configured to selectively accelerate or decelerate the gripped package 2b along path P with respect to such linear advancing speed.

In other words, the gripped package 2b is configured to be temporarily advanced faster or slower than the other packages 2 advanced by the conveyor device 11, due to the action of gripping device 12 as described above (and as schematized respectively in Figures 3c and 3d).

Accordingly, and opportunely, gripping device is configured to interact only with the single gripped package 2b of each group 10 (to be formed).

That is, gripping device 12 does not interact with the other packages 2 of the same group 10 (to be formed). These latter continue to be carried only by the conveyor device 11, without any interaction with gripping device 12.

As said, according to the preferred embodiment shown, the single gripped package 2b is advantageously defined by the first package 2b of each group 10 (to be formed).

More specifically, gripping device 12 is configured to cyclically grip the first package 2b of each group 10.

Such first package 2b is defined as the package upstream of the remaining packages 2 of the same group 10 relatively to the advancement direction D.

Accordingly, gripping device 12 is configured to accelerate the first package 2b with respect to the other packages 2 and towards the immediately preceding group 10, according to direction D, along path P and so that the first package 2b, and particularly its leading first wall 100 abuts against the last package 2 of the immediately preceding group 10, and particularly its trailing first wall 100, thereby pushing a number of packages 2 of the immediately preceding group 10 together for reducing or zeroing the first gap G1 between them (Figure 3c).

Such last package 2 is defined as the package downstream of the remaining packages 2 of the same group 10 (i.e. the aforesaid immediately preceding group 10) with respect to direction D.

In addition or in alternative, gripping device 12 is accordingly configured to decelerate the first package 2b with respect to the other packages 2 and towards the other packages 2 of the same group 10 (i.e. the same group 10 of the first package 2b) along path P, and so that the first package 2b abuts against the second package 2 of the same group 10, thereby pushing a number of packages 2 of such same group 10 together for reducing or zeroing the first gap G1 between them (Figure 3d).

Such second package 2 is defined as the package (of the same group 10) immediately downstream of the first package 2b relatively to direction D.

Preferably, gripping device 12 is configured to decelerate the first package 2b for spacing the first package 2b from the aforesaid last package 2 of the immediately preceding group 10 along path P, thereby defining a second gap G2 distinct from, and preferably larger than, first gap G1 between such last package 2 and the first package 2b.

In this way, groups 10 are separated from one another, by such second gap G2.

In light of the above, gripping device 12 is advantageously configured to first accelerate the gripped package, i.e. the first package 2b, with respect to the other packages 2 along path P and then to decelerate the gripped package, i.e. the first package 2b, with respect to the other packages 2 along path P, so that between two adjacent groups 10 the aforementioned second gap G2 is defined, and so that between packages 2 of the same group 10 the first gap G1 is reduced or zeroed.

Preferably, the first gap G1 is zeroed due to the acceleration and/or deceleration of the first package 2b.

Each group 10 comprises a first portion, which has a number of packages 2 equal to a fraction of (i.e. less than) the total number of packages 2 of the same group 10, and a second portion, which has a number of packages 2 equal to the total number of packages 2 of the same group 10 minus the number of packages 2 of the first portion.

Conveniently, the first portion includes half the packages 2 of one determined group 10 whereas the second portion includes the other half of packages 2.

It is stated that if each group 10 includes an odd number of packages 2 one of the first portion and the second portion includes an additional package 2 with respect to the other of the first portion and the second portion.

Preferably, gripping device 12 is configured to decelerate the first package 2b for reducing or zeroing (preferably zeroing) the first gaps G1 between the packages 2 of the first portion of the same group 10 (i.e. the group 10 of the first package 2b). This condition is shown in Figure 3d.

Furthermore, gripping device 12 is configured to accelerate the first package 2b for reducing or zeroing (preferably zeroing) the first gaps G1 between the packages 2 of the second portion of the immediately preceding group 10. This condition is shown in Figure 3c.

In other words, by means of the aforementioned deceleration of the first package 2b, the gaps G1 between a first half of the packages 2 of the same group 10 are reduced or zeroed, whereas by means of the aforementioned acceleration of the first package 2b, the gaps G1 between a second half of the packages 2 of the immediately preceding group 10 are reduced or zeroed.

Therefore, by means of the acceleration of the first package 2b, all the first gaps G1 between the packages 2 of the immediately preceding group 10 are reduced or zeroed (Figure 3c), whereas, by means of the deceleration of the first package 2b, half of the first gaps G1 between the packages 2 of the same group 10 of the first package 2 are reduced or zeroed, while at the same time the second gap G2 is defined (created) between the first package 2b and the last package 2 of the immediately preceding group 10 (Figure 3d).

Thanks to the configuration of unit 8 according to the present disclosure, a simple and effective way for organizing the packages 2 output from the folding unit in groups 10 separated from one another and (preferably) without gaps between the packages 2 of each group 10 is provided.

Moreover, thanks to the peculiar configuration of unit 8, only a portion (e.g. half) of the packages 2 of each group 10 is pushed by gripping device 12 during the acceleration and the deceleration: in this way, the total weight to be pushed in one "pushing cycle" (acceleration or deceleration) is significantly reduced. This results in a significant reduced inertia (also considering that packages 2 are filled with the pourable product) and in less force needed to effectively complete a grouping.

Furthermore, the risk of positioning or grouping errors is highly reduced, while the unit 8 can be leaner and less prone to breaks, maintenance and/or stops. Moreover, the footprint of unit 8 can be reduced.

Ultimately, thanks to the fact that only a portion (e.g. half) of the packages 2 of each group 10 is pushed by gripping device 12 during the acceleration and the deceleration, the robustness and effectiveness of unit 8 at high production speed is increased.

Unit 8 as described also enables to create gaps, i.e. second gaps G2, between groups 10 in one of the same movements (i.e. the deceleration) needed for defining a portion of one group 10, thereby making it easier to manipulate a single group 10 and also eliminating the need for a dedicated movement for the creation of gaps in between groups 10.

Preferably, gripping device 12 comprises a gripper member 13 for gripping the aforementioned one package, i.e. the first package 2b of each group 10.

Accordingly, gripping device 12 is configured to move gripper member 13 parallel to path P and to selectively accelerate or decelerate gripper member 13 for determining the aforementioned acceleration or deceleration, respectively, of the first package 2b.

In one preferred embodiment, gripper member 13 includes at least one pair of gripping pads 14 facing one another at least along path P (as shown in Figures 2, 3b, 3c and 3d) and configured to grip each respective first package 2b at said second pair of opposite lateral walls 200 thereof.

In one preferred non-limiting embodiment, gripping device 12 comprises a pair of endless belts 15 arranged adjacent to one another on opposite lateral sides of conveyor device 11, so that path P is interposed between the endless belts 15 themselves.

Each endless belt 15 carries one gripping pad 14.

More precisely, the endless belts 15 define between them a gripping path G extending along part of path P and along which the aforementioned one package, i.e. the first package 2b of each group 10, is gripped, in use, by the gripping pads 14.

In use, for each successive group 10, each gripping pad 14 is configured to cyclically cooperate with the other gripping pad 14 (i.e. the gripping pad 14 carried by the other endless belt 15) along the gripping path G, by means of the mutual rotation of the endless belts 15, for cyclically gripping the first package 2b.

In one embodiment, gripping device has a plurality of gripping members 13, i.e. a plurality of pair of pads 14.

More in particular, each endless belts carries more than one gripping pad 14, for example two gripping pads 14, each gripping pad 14 being configured to cooperate with a corresponding gripping pad 14 carried by the other endless belt 15 for gripping the respective package 2b.

In this way, the flexibility and adaptability of unit 8 to packages 2 of different formats and/or to groups 10 of different sizes is improved.

Moreover, in order to further increase such flexibility and adaptability, it is sufficient to change the relative position of the gripping pads 14 carried by one respective endless belt 15 on the same endless belt 15, in order to adapt to various sizes (lengths) of the groups 10.

In one embodiment, unit 8 may include a control unit configured to control conveyor device 11 and gripping device 12, i.e. gripper member 13 and therefore gripping pads 14 and endless belts 15. Control unit is configured to control the acceleration and/or deceleration of the gripping device 12 (and, so, of the gripped package 2b) as discussed above.

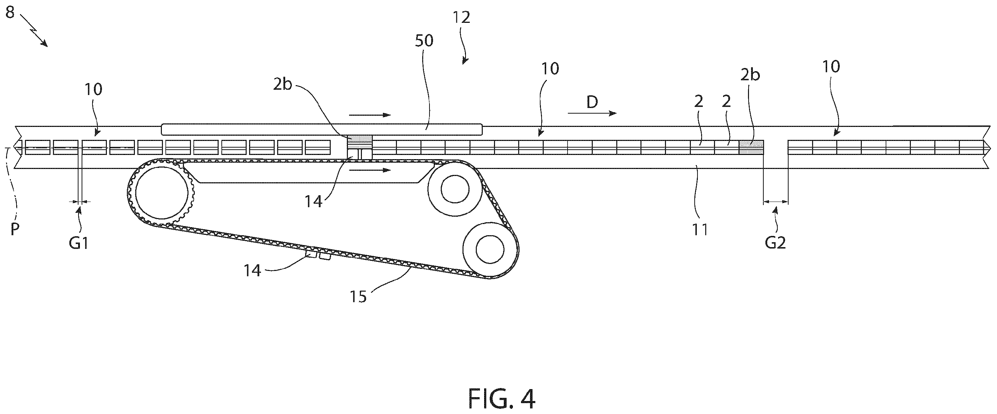

Figure 4 illustrates an alternative embodiment of the unit 8 according to the present invention.

In particular, unit 8 according to such alternative embodiment differs from the unit 8 as described above in that gripper member 13 includes a (in particular, only one) movable gripping pad 14 and a fixed guide wall 50 which extends along the advancing path P.

Gripping pad 14 is movable along the advancing path P. More specifically, gripping pad 14 is movably carried by an endless belt 15 as explained above.

In particular, gripper member 13 comprises a single endless belt 15, carrying at least one, and in particular a plurality of gripping pads 14, and a (single) single guide wall 15.

Guide wall 50 is fixed along advancing path P and with respect to conveyor device 11. Guide wall 20 is elongated parallel to advancing path P. In particular, guide wall 20 is located on an opposite side of the advancement path P, with respect to endless belt 15.

Gripping pad 14 is configured to laterally push each package 2b against guide wall 50, so that lateral walls 200 are pressed between gripping pad 14 and guide wall 50 (as shown in Figure 4). In particular, gripping pad 14 is movable towards (and away from) the guide wall 50 to push each package 2b against guide wall 50.

Hence, gripping pad 14 and guide wall 50 define between them the gripping path G.

In use, gripping pad 14 pushes package 2b against guide wall 50, and at the same time advances along path G carried by belt 15.

Accordingly, package 2b slides onto guide wall 50, pushed and advanced by gripping pad 14 moved by endless belt 15. The guide wall 50 defines a static rail.

Conveniently, the movements of such gripping pad 14 are the same as the ones described above.

Thanks to this particular configuration, only a single endless belt 15, thus a single component with moving parts, can be used, thereby reducing costs and increasing the reliability of gripping device 12, as well as reducing the need for maintenance.

Preferably, guide wall 50 may comprise a deviating portion (not shown) arranged at an end section of guide wall 50 and configured to guide the package 2b in an aligned position with the other packages 2 of the same group.

From the foregoing, it is clear how unit 8 according to the present disclosure enables to implement a method for grouping packages 2 containing a pourable product, the method comprising one or more of the following steps:
a) advancing a sequence of packages 2 in an advancement direction D along an advancing path P, the sequence including a row of packages 2 spaced from one another along path P by a first gap G1 (Figure 2 and 3a);
b) gripping one package 2b at a time for each successive group 10 to be formed (Figure 3b);
wherein the method comprises the steps of:
c1) accelerating the gripped package 2b with respect to the other packages 2 advanced along path P and towards preceding packages 2, relatively to the advancement direction D;
c2) abutting, by means of the step c1) of accelerating, the gripped package 2b against the immediately adjacent preceding package 2; and
c3) pushing, by means of the step c1) of accelerating and the step c2) of abutting, a number of preceding packages 2 together for reducing or zeroing said first gap G1 between them (Figure 3c);
and/or wherein the method comprises the steps of:
   d1) decelerating the gripped package 2b with respect to the other packages 2 along path P and towards following packages 2, relatively to the advancement direction D;
   d2) abutting, by means of the step d1) of decelerating, the gripped package 2b against the immediately adjacent following package 2; and
   d3) pushing, by means of the step d1) of decelerating and the step d2) of abutting, a number of following packages 2 together for reducing or zeroing said first gap G1 between them (Figure 3d).

Preferably, the step b) of gripping comprises gripping the first package 2b of each group 10, said first package 2b being defined as the package upstream of the remaining packages 2 of the same group 10 relatively to the advancement direction D.

Preferably the step c1) of accelerating comprises accelerating said first package 2b towards the immediately preceding group 10, relatively to the advancement direction D, and the step c2) of abutting comprising abutting the first package 2b against the last package 2 of the immediately preceding group 10, said last package 2 being defined as the package downstream of the remaining packages 2 of the same group 10 with respect to the advancement direction D.

In other words, the step d1) of decelerating comprises decelerating said first package 2b towards the other packages 2 of the same group 10, and the step d2) of abutting comprises abutting the first package 2b against the second package 2 of the same group 10, said second package 2 being defined as the package immediately downstream of the first package 2b relatively to the advancement direction D.

Preferably, the method further comprises the step of:
e) spacing, by means of the step d1) of decelerating, the first package 2b from said last package 2 of the immediately preceding group 10, thereby defining a second gap G2 distinct from, and preferably larger than, said first gap G1 between said last package 2 and the first package 2b.

Preferably, the step b) of gripping comprises gripping said one package 2b at a first pair of opposite lateral walls thereof 200.

Preferably, the step c2) of abutting comprises abutting a first wall 100 of a second pair of opposite lateral walls 100 of said one package 2b against said immediately adjacent preceding package 2, and wherein the step d2) of abutting comprises abutting a second wall 100 of a second pair of opposite lateral walls 100 of said one package 2b against the immediately adjacent following package 2.

Preferably, the method further comprises the steps of:
f) reducing or zeroing, for each group 10, the first gaps G1 between packages 2 of a first portion of the group 10 (to be formed) by means of the step d1) of decelerating, the first portion having a number of packages 2 equal to a fraction of (i.e. less than) the total number of packages 2 of the same group 10;
g) reducing or zeroing, for each group 10, the first gaps G1 between packages of a second portion of the group 10 by means of the step c1) of accelerating, the second portion having a number of packages 2 equal to the total number of packages 2 of the same group 10 minus the number of packages 2 of the first portion.

The advantages of unit 8 and of the method according to the present invention will be clear from the foregoing description.

In particular, thanks to the configuration of unit 8 according to the present invention, and thanks to the related method, a simple and effective way for organizing the packages 2 output from the folding unit in groups 10 separated from one another and without gaps between the packages 2 of each group 10 is provided.

Moreover, thanks to the peculiar configuration of unit 8, only a portion (e.g. half) of the packages 2 of each group 10 is pushed by gripping device 12 during the acceleration and the deceleration: in this way, the total weight to be pushed in one "pushing cycle" is significantly reduced. This results in a significant reduced inertia (also considering that packages 2 are filled with the pourable product) and less force needed to effectively complete a grouping. Hence, the footprint of unit 8 can be reduced.

Ultimately, the risk of positioning/grouping errors is highly reduced, while the unit 8 can be leaner and less prone to breaks, maintenance and/or stops. Hence, the robustness of the solution is increased, even when running at high speed.

Clearly, changes may be made to unit 8 and the related method as described herein without, however, departing from the scope of protection as defined in the accompanying claims.

## Claims

1. A unit (8) for grouping packages (2) containing a pourable product in groups (10), the unit (8) comprising:
- a conveyor device (11) for advancing a sequence of packages (2) in an advancement direction (D) along an advancing path (P), the packages of the sequence of packages (2) being spaced from one another along the advancing path (P) by a first gap (G1);
- a gripping device (12) arranged adjacent to the advancing path (P) and configured to grip one package (2b) of the sequence of packages (2) at a time;
wherein the gripping device (12) is configured to:
- accelerate the gripped package (2b) with respect to the other packages (2) and towards preceding packages (2), relatively to the advancement direction (D), along the advancing path (P) and so that the gripped package (2b) abuts against the immediately adjacent preceding package (2) thereby pushing a number of preceding packages (2) together for reducing or zeroing said first gap (G1) between them; and
- decelerate the gripped package (2b) with respect to the other packages (2) and towards following packages (2), relatively to the advancement direction (D), along the advancing path (P) and so that the gripped package (2b) is distanced from the preceding packages (2) and abuts against the immediately adjacent following package (2b) thereby pushing a number of following packages (2) together for reducing or zeroing said first gap (G1) between them.

2. Unit as claimed in claim 1, wherein the gripping device (12) is configured to cyclically grip the first package (2b) of each group (10) to be formed, said first package (2b) being defined as the package upstream of the remaining packages (2) of the same group (10) relatively to the advancement direction (D);
wherein the gripping device (12) is configured to:
- accelerate said first package (2b) with respect to the other packages (2) and towards the immediately preceding group of packages (10), relatively to the advancement direction (D), along the advancing path (P) and so that the first package (2b) abuts against the last package (2) of the immediately preceding group of packages (10), said last package (2) being defined as the package downstream of the remaining packages (2) of its same group of packages (10) with respect to the advancement direction (D), thereby pushing a number of packages (2) of the immediately preceding group of packages (10) together for reducing or zeroing said first gap (G1) between them; and
- decelerate said first package (2b) with respect to the other packages (2) and towards the other packages (2) of the same group (10) of packages (2) along the advancing path (P), and so that the first package (2b) is distanced from the preceding group of packages (10) and abuts against a second package (2) of the same group (10) of packages (2), the second package (2) being defined as the package immediately downstream of the first package (2b) relatively to the advancement direction (D), thereby pushing a number of packages (2) of such same group (10) of packages (2) together for reducing or zeroing said first gap (G1) between them.

3. Unit as claimed in claim 2, wherein the gripping device (12) is configured to decelerate the first package (2b) for spacing the first package (2b) from said last package (2) of the immediately preceding group (10) of packages (2) along the advancing path (P), thereby defining a second gap (G2) distinct from, and larger than, said first gap (G1) between said last package (2) and the first package (2b).

4. Unit as claimed in claim 2 or 3, wherein each group (10) of packages (2) comprises a first portion, which has a number of packages (2) less than the total number of packages (2) of the same group of packages (10), and a second portion, which has a number of packages (2) equal to the total number of packages (2) of the same group of packages (10) minus the number of packages (2) of the first portion;
wherein the gripping device (12) is configured to accelerate said first package (2b) for reducing or zeroing the first gaps (G1) between the packages (2) of the second portion of said immediately preceding group (10) of packages (2), and
wherein the gripping device (12) is configured to decelerate said first package (2b) for reducing or zeroing the first gaps (G1) between the packages (2) of the first portion of said same group (10) of packages (2).

5. Unit as claimed in any one of the foregoing claims, wherein the gripping device (12) is configured to first accelerate said gripped package (2b) with respect to the other packages (2) along the advancing path (P) and then to decelerate said gripped package (2) with respect to the other packages (2) along the advancing path (P), so that between two adjacent groups of packages (10) a second gap (G2) larger than the first gap (G1) is defined, and so that between packages (2) of the same group of packages (10) said first gap (G1) is reduced or zeroed.

6. Unit as claimed in any one of the foregoing claims, wherein the gripping device (12) comprises a gripper member (13) for gripping said one package (2b), the gripping device (12) being configured to move the gripper member (13) parallel to the advancing path (P), the gripping device (12) being configured to selectively accelerate and/or decelerate the gripper member (13) for determining said acceleration or deceleration, respectively, of the gripped package (2b).

7. Unit as claimed in claim 6, wherein the gripper member (13) includes at least one pair of gripping pads (14) facing one another at least along the advancing path (P) and configured to grip each respective package (2) at a first pair of opposite lateral walls (200) thereof.

8. Unit as claimed in claim 7, wherein the gripping device (12) comprises a pair of endless belts (15) arranged adjacent to one another on opposite lateral sides of the conveyor device (11), so that the advancing path (P) is interposed between the endless belts (15), each endless belt (15) carrying one said gripping pad (14), the endless belts (15) defining between them a gripping path (G) extending along part of the advancing path (P) and along which said one package (2b) is gripped, in use, by the gripping pads (14);
and wherein, for each successive group of packages (10), each gripping pad (14) is configured to cyclically cooperate with the other gripping pad (14) along the gripping path (G), by means of the mutual rotation of the endless belts (15), for cyclically gripping said one package (2b).

9. Unit as claimed in claim 6, wherein the gripper member (13) includes a movable gripping pad (14) and a fixed guide wall (50) which extends along the advancing path (P), the gripping pad (14) and the guide wall (50) facing one another along the advancing path (P), the gripping pad (14) being movable along the advancing path (P), the guide wall (50) being fixed along the advancing path (P) and with respect to the conveyor device (11), the gripping pad (14) being configured to laterally push each said one package (2b) against the guide wall (50), so that opposite lateral walls (200) of the package (2b) are pressed between the gripping pad (14) and the guide wall (50).

10. Packaging machine (1) configured to produce packages (2) containing a pourable product starting from a web (4) of packaging material, the packaging machine (1) comprising:
- a device for advancing the web (4);
- a web folding device (5) for folding the web (4) into a tube (3);
- a forming and sealing unit (6) for forming the tube (3) and sealing the tube (3) thereby obtaining a sequence of packs (2a);
- a folding unit for folding the packs (2a) thereby obtaining a sequence of packages (2);
- a unit (8) for grouping the packages (2) as claimed in any one of the foregoing claims.

11. Method for grouping packages (2) containing a pourable product in groups (10), the method comprising the steps of:
a) advancing a sequence of packages (2) in an advancement direction (D) along an advancing path (P), the packages (2) of the sequence of packages (2) being spaced from one another along the advancing path (P) by a first gap (G1);
b) gripping one package (2b) at a time, of the sequence of packages (2) advanced during the step a) of advancing;
wherein the method comprises the steps of:
c1) accelerating the gripped package (2b) with respect to the other packages (2) advanced along the advancing path (P) and towards preceding packages (2), relatively to the advancement direction (D);
c2) abutting, by means of the step c1) of accelerating, the gripped package (2b) against the immediately adjacent preceding package (2); and
c3) pushing, by means of the step c1) of accelerating and the step c2) of abutting, a number of preceding packages (2) together for reducing or zeroing said first gap (G1) between them,
d1) decelerating the gripped package (2) with respect to the other packages (2) along the advancing path (P) and towards following packages (2), relatively to the advancement direction (D);
d2) abutting, by means of the step d1) of accelerating, the gripped package (2b) against the immediately adjacent following package (2); and
d3) pushing, by means of the step d1) of accelerating and the step d2) of abutting, a number of following packages (2) together for reducing or zeroing said first gap (G1) between them.

12. Method as claimed in claim 11, wherein the step b) of gripping comprises gripping the first package (2b) of each group of packages (10) to be formed, said first package (2b) being defined as the package upstream of the remaining packages (2) of the same group of packages (10) relatively to the advancement direction (D);
wherein the step c1) of accelerating comprises accelerating said first package (2b) towards the immediately preceding group of packages (10), relatively to the advancement direction (D), and the step c2) of abutting comprising abutting the first package (2b) against the last package (2) of the immediately preceding group of packages (10), said last package (2) being defined as the package downstream of the remaining packages (2) of the same group of packages (10) with respect to the advancement direction (D);
and wherein the step d1) of decelerating comprises decelerating said first package (2b) towards the other packages (2) of the same group of packages (10), and the step d2) of abutting comprises abutting the first package (2b) against the second package (2) of the same group of packages (10), said second package (2) being defined as the package immediately downstream of the first package (2b) relatively to the advancement direction (D).

13. Method as claimed in claim 12, and further comprising the step of:
e) spacing, by means of the step d1) of decelerating, the first package (2b) from said last package (2) of the immediately preceding group of packages (10), thereby defining a second gap (G2) distinct from, and larger than, said first gap G1) between said last package (2) and the first package (2b).

14. Method as claimed in any one of the claims 11 to 13, wherein the step b) of gripping comprises gripping said one package (2b) at a first pair of opposite lateral walls (200) thereof, wherein the step c2) of abutting comprises abutting a first wall (100) of a second pair of opposite lateral walls (100) of said one package (2b) against said immediately adjacent preceding package (2), and wherein the step d2) of abutting comprises abutting a second wall (100) of a second pair of opposite lateral walls (100) of said one package (2b) against the immediately adjacent following package (2).

15. Method as claimed in any one of the claims 11 to 14, and comprising the steps of:
f) reducing or zeroing, for each group of packages (10), the first gaps (G1) between packages (2) of a first portion of the group of packages (10) by means of the step d1) of decelerating, the first portion having a number of packages (2) less than the total number of packages (2) of the same group of packages (10);
g) reducing or zeroing, for each group of packages (10), the first gaps (G1) between packages (2) of a second portion of the group of packages (10) by means of the step c1) of accelerating, the second portion having a number of packages (2) equal to the total number of packages (2) of the same group of packages (10) minus the number of packages (2) of the first portion.
